# EUROPEAN PATENT APPLICATION

(11) **EP 4 811 870 A1**
(43) Date of publication of application: **23.09.2026**
(21) Application number: 23958920.3
(22) Date of filing: 17.11.2023
(51) Int. Cl.: H04W 48/16, H04W 4/70, H04W 72/0446, H04W 72/0453

(54) **TERMINAL, WIRELESS COMMUNICATION METHOD, AND BASE STATION**

(71) Applicant: NTT DOCOMO, INC., Tokyo 100-6150 (JP)
(72) Inventor: KURITA, Daisuke, Tokyo 100-6150 (JP); SHICHIJO, Taichi, Tokyo 100-6150 (JP); HARADA, Hiroki, Tokyo 100-6150 (JP)
(74) Representative: Hoffmann Eitle
(86) International application number: PCT/JP2023/041507
(87) International publication number: WO 2025/104920

(57) **Abstract**

A terminal according to one aspect of the present disclosure includes: a receiving section that receives, between a first synchronization signal block transmitted in a first band and a second synchronization signal block transmitted in a second band wider than the first band, at least the first synchronization signal block; and a control section that controls an initial access procedure, based on at least the first synchronization signal block. According to one aspect of the present disclosure, it is possible to appropriately perform an initial access procedure.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In 5G NR (for example, 3GPP Rel. 17 or later versions), in order to support various use cases such as Internet of Things (IoT), a Reduced UE capability (RedCap) UE with required capability being reduced compared to that of a normal terminal (user terminal, User Equipment (UE)).

For a future radio communication system (for example, 6G), it is studied to use a new RedCap UE (also referred to as a RedCap UE in 6G) with required capability being further reduced compared to that of an existing RedCap UE (also referred to as a known RedCap UE or a RedCap UE in 5G NR) (for example, with a supported band being narrower than that of an existing RedCap UE).

However, when the band supported by the new RedCap UE is narrower than the band supported by the existing RedCap UE, there is a possibility that an initial access procedure using a synchronization signal block (SSB) having a similar frequency bandwidth to that of a known synchronization signal cannot be appropriately performed. Unless the initial access procedure is performed appropriately, system performance may degrade, for example, communication throughput may decrease.

Thus, an object of the present disclosure is to provide a terminal, a radio communication method, and a base station that can appropriately perform initial access.

### Solution to Problem

A terminal according to one aspect of the present disclosure includes: a receiving section that receives, between a first synchronization signal block transmitted in a first band and a second synchronization signal block transmitted in a second band wider than the first band, at least the first synchronization signal block; and a control section that controls an initial access procedure, based on at least the first synchronization signal block.

### Advantageous Effects of Invention

According to one aspect of the present disclosure, it is possible to appropriately perform initial access.

### Brief Description of Drawings

[FIG. 1] FIG. 1 is a diagram to show an example of a configuration of an SSB in 5G NR.
[FIG. 2] FIG. 2A and FIG. 2B are diagrams to show examples of frequency arrangement of a narrowband SSB and a wideband SSB.
[FIG. 3] FIG. 3A and FIG. 3B are diagrams to show examples of frequency arrangement of a narrowband SSB and a wideband SSB.
[FIG. 4] FIGS. 4A to 4C are diagrams to show examples of synchronization rasters.
[FIG. 5] FIG. 5 is a diagram to show an example of sequences of synchronization signals of SSBs.
[FIG. 6] FIG. 6 is a diagram to show an example of sequences of synchronization signals of SSBs.
[FIG. 7] FIG. 7 is a diagram to show an example of a schematic structure of a radio communication system according to one embodiment.
[FIG. 8] FIG. 8 is a diagram to show an example of a structure of a base station according to one embodiment.
[FIG. 9] FIG. 9 is a diagram to show an example of a structure of a user terminal according to one embodiment.
[FIG. 10] FIG. 10 is a diagram to show an example of a hardware structure of the base station and the user terminal according to one embodiment.
[FIG. 11] FIG. 11 is a diagram to show an example of a vehicle according to one embodiment.

### Description of Embodiments

### (RedCap UE)

In 5G NR (for example, 3GPP Rel. 17 or later versions), it is supported to use a communication system introduced in 3GPP Rel. 15 for use cases such as IoT. As examples of the use cases of IoT in 5G NR, an industry wireless sensor NW (IWSN), a video surveillance system, a wearable device, and use cases of known IoT using an LTE terminal (for example, smart home, smart water, an electricity meter, a smart signal, or the like) are supported.

A condition or a capability (for example, a UE capability or a requirement) required for a terminal to be applied to such use cases is reduced from a condition or a capability required for a UE defined or supported in Rel. 15 (for example, also referred to as an existing normal UE or a Non-RedCap UE). A UE in 5G NR with a condition or capability required for the terminal being reduced compared to that of a normal UE may be referred to as an existing RedCap UE, a known RedCap UE, a RedCap UE of 5G NR, and the like.

An existing RedCap UE is configured with a smaller or narrower bandwidth to be used for communication than that of an existing normal UE (Bandwidth reduction).

In Rel. 15, an existing normal UE needs to support a certain bandwidth according to a frequency range (for example, Frequency Range (FR) 1, FR2). A bandwidth that a UE needs to support may be referred to as a maximum bandwidth (maximum channel bandwidth).

For example, in a first frequency range (FR1), an existing normal UE needs to support a maximum bandwidth of 100 MHz. In a second frequency range (FR2), the existing normal UE needs to support a maximum bandwidth of 200 MHz.

Meanwhile, a bandwidth (for example, a mandatory bandwidth) supported by an existing RedCap UE is configured to be narrower than a bandwidth supported by an existing normal UE.

For example, in a first frequency range (FR1), an existing RedCap UE needs to support a maximum bandwidth of 20 MHz. In a second frequency range (FR2), the existing RedCap UE needs to support a maximum bandwidth of 100 MHz.

### (Initial Access)

In 5G NR, a synchronization signal block (SSB) is defined, which is a signal for a UE to perform time and frequency synchronization with a base station.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

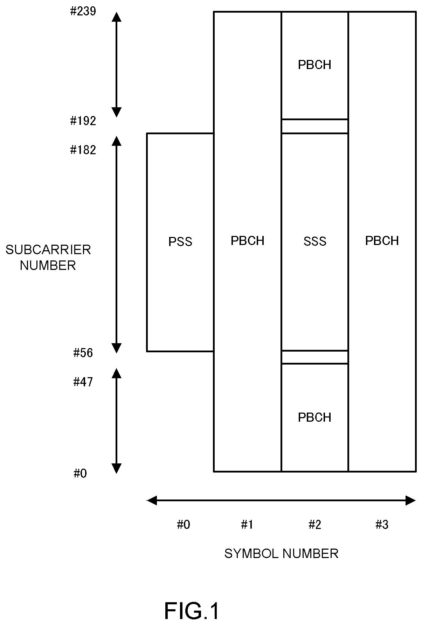

FIG. 1 is a diagram to show an example of a configuration of an SSB in 5G NR. The SSB shown in FIG. 1 is mapped across four symbols. A PSS occupies one symbol (symbol #0) and 127 subcarriers (subcarriers #56 to #182), and an SSS occupies one symbol (symbol #2) and 127 subcarriers (subcarriers #56 to #182). A PBCH is configured across three symbols (symbols #1 to #3) and 240 subcarriers (subcarriers #0 to #239) but is mapped to one symbol (symbol #2) with an unused portion (subcarriers #56 to #182) left for the SSS. In symbol #2, there may be a portion where neither the SSS nor the PBCH is mapped between the SSS and the PBCH.

In the initial access procedure, a UE (RRC_IDLE mode) receives an SS/PBCH block (SSB), transmits Msg. 1 (PRACH/random access preamble/preamble), receives Msg. 2 (PDCCH, PDSCH including random access response (RAR)), transmits Msg. 3 (PUSCH scheduled by RAR UL grant), and receives Msg. 4 (PDCCH, PDSCH including UE contention resolution identity). Thereafter, when the UE transmits an ACK for Msg. 4 by a base station (network), an RRC connection is established (RRC_CONNECTED mode).

The reception of the SSB includes PSS detection, SSS detection, PBCH-DMRS detection, and PBCH reception. The PSS detection performs detection of a part of a physical cell ID (PCI), detection (synchronization) of OFDM symbol timing, and (coarse) frequency synchronization. The SSS detection includes detection of a physical cell ID. The PBCH-DMRS detection includes detection of (part of) an SSB index in a half radio frame (5ms). The PBCH reception includes detection of a system frame number (SFN) and radio frame timing (SSB index), reception of configuration information for remaining minimum system information (RMSI, SIB1) reception, and recognition of whether or not the UE can camp on the cell (carrier).

The SSB has a bandwidth of 20 RBs and a time of 4 symbols. The transmission periodicity of the SSB may be configured from {5, 10, 20, 40, 80, 160} ms. In the half frame, a plurality of symbol positions of the SSB are defined based on a frequency range (FR1, FR2).

The PBCH has payload of 56 bits. N repetitions of the PBCH are transmitted within periodicity of 80 ms. N depends on SSB transmission periodicity.

The system information includes an MIB carried by the PBCH, RMSI (SIB1), and other system information (OSI). SIB1 includes information for performing RACH configuration and a RACH procedure. The relationship of time/frequency resources between the SSB and a PDCCH monitoring resource for SIB1 is configured by the PBCH.

A base station using beam correspondence transmits a plurality of SSBs by using a plurality of respective beams, in each SSB transmission periodicity. The plurality of SSBs have a plurality of respective SSB indices. A UE that has detected one SSB transmits a PRACH in a RACH occasion associated with the SSB index and receives a RAR in a RAR window.

Frequencies where the UE searches for a PSS/SSS may be referred to as a synchronization raster.

In 5G NR, the center frequency of an SSB is located on a synchronization raster.

The synchronization raster is defined for each frequency range (FR1/FR2).

The wider the frequency interval of each synchronization raster (the smaller the number of synchronization rasters) is, the shorter the time required for the search in the initial access becomes, and the smaller the load becomes.

A candidate for a frequency position at which a component carrier (CC) is arranged is referred to as a channel raster.

The interval of the synchronization rasters is determined to satisfy a specific condition. Specifically, the interval of the synchronization rasters is determined such that, even when the CC is arranged at any channel raster with a minimum channel bandwidth (CBW), there is at least one synchronization raster with the band of an SSB in the synchronization raster being included in the CBW.

When a UE fails to receive an SSB at a specific synchronization raster within a specific period, the UE attempts to receive the SSB at another synchronization raster. Note that the length of the specific period depends on UE implementation.

The order in which the UE searches the synchronization rasters at the time of initial access depends on UE implementation. For efficient search, Global Synchronization Channel Numbers (GSCNs) are defined, and the UE is notified of a GSCN offset/GSCN range.

Search-target frequencies for a PSS/SSS other than the time of the initial access are indicated from a network (NW, for example, a base station) to the UE.

For example, when the UE is indicated to measure an RSRP/RSRQ/SINR for a neighbor cell, the UE is indicated to use the higher layer parameter "MeasObjectNR" to indicate an SSB frequency.

For example, when addition of a serving cell is indicated, the UE is indicated with a corresponding SSB frequency by using the higher layer parameter "FrequencyInfoDL."

For example, the UE (RRC_IDLE mode) is indicated with the SSB frequency by using SIB4 (InterFreqCarrierFreqInfo).

(6G)
Studies on 6G have been started. In 6G, higher performance requirements and various use cases described below are assumed.
- Ultra-coverage expansion/ultra-long distance communication
- Ultra-large capacity
- Ultra-reliable communication
- Virtual cell (UE centric no cell)
- Flexible NW
- Mesh NW/Side link

In 6G, operation using a narrowband in view of Internet of Things (IoT) is assumed. It is assumed that an IoT terminal in 6G is a terminal with a condition or capability required for the terminal being further restricted compared to that of an existing RedCap UE. A normal/basic UE for at least one of communication technologies of 5G NR, 6G, or later versions may be referred to as a normal UE and a wideband terminal. The wideband terminal may include an existing RedCap UE and a UE supporting a bandwidth of an existing RedCap UE. A UE in 6G with a condition or a capability required for the terminal being reduced compared to that of an existing RedCap UE may be referred to as a new RedCap UE, a RedCap UE of 6G, a narrowband terminal, and the like.

In 5G NR, an existing RedCap UE monitors/receives an SSB by using the same bandwidth as that of an existing normal UE. For example, when subcarrier spacing is 15 kHz, the bandwidth of the SSB is approximately 1.9 MHz.

However, when a new RedCap UE supports only a bandwidth (for example, 1 MHz) narrower than the bandwidth of an SSB supported in 5G NR, the new RedCap UE cannot monitor/receive the SSB.

It is conceivable to configure an SSB as a signal for all terminals to receive in an initial access procedure and to design an SSB of 6G with an SSB having an equivalent frequency bandwidth to that of 5G NR as a baseline. In this case, adding a narrowband SSB (SSB for a new RedCapUE, SSB that can be monitored/received by a new RedCap UE) in a subsequent release is inefficient in terms of specifications and operation. Hence, it is necessary to consider addition of a narrowband SSB from the beginning of designing 6G.

Thus, the inventors of the present invention came up with the idea of an initial access procedure using a narrowband SSB.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, an SSB having the same bandwidth as the maximum bandwidth supported by a narrowband terminal or a bandwidth narrower or smaller than the maximum bandwidth supported by a narrowband terminal may be referred to as a narrowband SSB. An SSB having a bandwidth wider or larger than the maximum bandwidth supported by a narrowband terminal may be referred to as a wideband SSB. The bandwidth of a wideband SSB may be the same as the maximum bandwidth supported by a wideband terminal or a bandwidth narrower or smaller than the maximum bandwidth supported by a wideband terminal.

In the present disclosure, the bandwidth of a wideband SSB may be wider or larger than the bandwidth of a narrowband SSB. In other words, a wideband SSB may be transmitted in a band wider than a band in which the narrowband SSB is transmitted.

In the present disclosure, "notify," "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, a synchronization signal, a synchronization signal block (SSB), a primary synchronization signal (PSS), a secondary synchronization signal (SSS), a tertiary synchronization signal (TSS), a quaternary synchronization signal (QSS), a broadcast channel (physical broadcast channel (PBCH), a narrowband SSB, a wideband SSB, and the like may be interchangeably interpreted.

In the present disclosure, an SSB having a narrower band than that of an SSB of 5G NR, a narrowband SSB, an SSB of 6G, an SSB having a first bandwidth, an SSB transmitted in a first band, and the like may be interchangeably interpreted.

In the present disclosure, an SSB of 5G NR, an existing SSB, an SSB of an existing specification, a wideband SSB, an SSB having a second bandwidth, an SSB transmitted in a second band, and the like may be interchangeably interpreted.

In the present disclosure, a position, arrangement, a resource, a band, a frequency, a candidate, a synchronization raster, an existing synchronization raster, a narrowband synchronization raster, a wideband synchronization raster, a common synchronization raster, a synthesized synchronization raster, and the like may be interchangeably interpreted.

In the present disclosure, a terminal, a narrowband terminal, a new RedCap UE, a terminal supporting a first bandwidth, and the like may be interchangeably interpreted.

In the present disclosure, a terminal, a wideband terminal, an existing normal UE, an existing RedCap UE, a normal UE, a terminal supporting a bandwidth wider than a first bandwidth, a terminal supporting a second bandwidth, and the like may be interchangeably interpreted.

In the present disclosure, "search," "investigate," "monitor," "receive," "decode," "detect," "acquire," and the like may be interchangeably interpreted.

### (Radio Communication Method)

### <First Embodiment>

A first embodiment relates to a configuration of time/frequency resources of a narrowband SSB and a wideband SSB.

A synchronizing signal and a PBCH may be defined individually, or a synchronizing signal and a PBCH may be defined together as an SSB similarly to 5G NR.

### {Frequency Resources}

For a narrowband SSB and a wideband SSB, any of the following options may be defined.
- Option 1: The narrowband SSB and the wideband SSB are non-contiguous in the frequency direction.
- Option 2: The narrowband SSB and the wideband SSB are contiguous in the frequency direction.

Option 1 above may mean that an interval/gap is provided in the frequency direction between the narrowband SSB and the wideband SSB or may mean that a specific signal (for example, a synchronization signal/PBCH) is not configured/transmitted between the narrowband SSB and the wideband SSB.

Option 2 above may mean that an interval/gap is not provided in the frequency direction between the narrowband SSB and the wideband SSB or may mean that a specific signal (for example, a synchronization signal/PBCH) is configured/transmitted between the narrowband SSB and the wideband SSB.

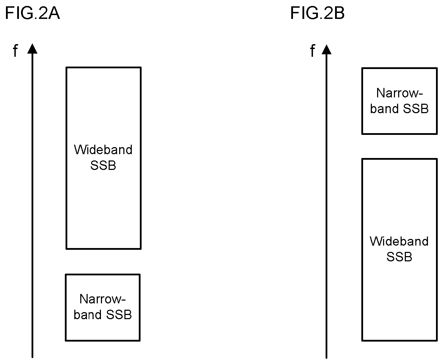

FIG. 2A and FIG. 2B are diagrams to show examples of option 1 above. In option 1 above, as shown in FIG. 2A and FIG. 2B, a narrowband SSB and a wideband SSB are non-contiguous in the frequency direction. Regarding the frequency arrangement of the narrowband SSB and the wideband SSB, as shown in FIG. 2A, the narrowband SSB may be configured/transmitted at lower frequencies than those of the wideband SSB, and the wideband SSB may be configured/transmitted at higher frequencies than those of the narrowband SSB. As shown in FIG. 2B, the narrowband SSB may be configured/transmitted at higher frequencies than those of the wideband SSB, and the wideband SSB may be configured/transmitted at lower frequencies than those of the narrowband SSB.

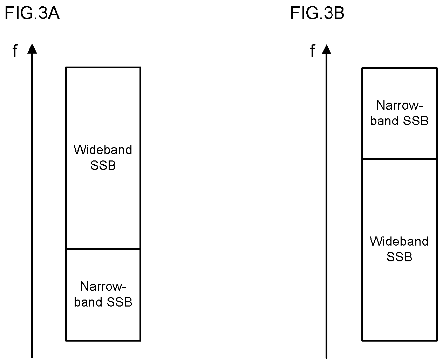

FIG. 3A and FIG. 3B are diagrams to show examples of option 2 above. In option 2 above, as shown in FIG. 3A and FIG. 3B, a narrowband SSB and a wideband SSB are contiguous in the frequency direction. Regarding the frequency arrangement of the narrowband SSB and the wideband SSB, as shown in FIG. 3A, the narrowband SSB may be configured/transmitted at lower frequencies than those of the wideband SSB, and the wideband SSB may be configured/transmitted at higher frequencies than those of the wideband SSB. As shown in FIG. 3B, the narrowband SSB may be configured/transmitted at higher frequencies than those of the wideband SSB, and the wideband SSB may be configured/transmitted at lower frequencies than those of the narrowband SSB.

### {Time Resources}

The narrowband SSB and the wideband SSB may be configured/transmitted in the same time resource (frequency division multiplexed (FDMed)) or may be configured/transmitted in different time resources (time division multiplexed (TDMed)).

When the narrowband SSB and the wideband SSB are configured/transmitted in different time resources, the narrowband SSB and the wideband SSB may overlap in the frequency direction (may be TDMed) or need not overlap (may be TDMed and FDMed).

The sizes/lengths (for example, the numbers of symbols) of the time resources of the narrowband SSB and the wideband SSB may be the same. In this case, it is not necessary to consider the size/length of the time resource depending on whether an SSB to be transmitted is a narrowband SSB or a wideband SSB, which can reduce the processing load associated with the resource configuration of the SSB.

The sizes/lengths (for example, the numbers of symbols) of the time resources of the narrowband SSB and the wideband SSB may be different from each other. For example, the number of symbols of the narrowband SSB may be larger than the number of symbols of the wideband. In this case, a resource increase of the narrowband SSB can increase the amount of information transmitted by the narrowband SSB.

According to the first embodiment described above, in an initial access procedure using both a narrowband SSB and a wideband SSB, the time/frequency resources of the narrowband SSB and the wideband SSB can be appropriately configured.

### <Second Embodiment>

In a second embodiment, a wideband terminal and a narrowband terminal always investigate a narrowband SSB in an initial access procedure.

A synchronization raster (also referred to as a narrowband synchronization raster) that is a candidate for the center frequency of the narrowband SSB may be defined. In this case, the wideband terminal and the narrowband terminal may investigate an SSB arranged on the narrowband synchronization raster. The wideband terminal and the narrowband terminal need not (or need not assume to) investigate an SSB not arranged on the narrowband synchronization raster. The narrowband synchronization raster may be the same as or different from a synchronization raster (also referred to as an existing synchronization raster) in an existing specification (for example, 5G NR).

In addition to the narrowband synchronization raster, a synchronization raster (also referred to as a wideband synchronization raster) that is a candidate for the center frequency of the wideband SSB may be defined.

The wideband synchronization raster may be the same as the narrowband synchronization raster. In this case, a synchronization raster in common (also referred to as a common synchronization raster) that is a candidate for both the center frequency of the narrowband SSB and the center frequency of the wideband SSB may be defined instead of the narrowband synchronization raster and the wideband synchronization raster.

The wideband synchronization raster and the narrowband synchronization raster may be defined separately. In other words, the wideband synchronization raster may be different from the narrowband synchronization raster.

The wideband synchronization raster may be the same as or different from an existing synchronization raster.

When a narrowband SSB and a wideband SSB are contiguous in the frequency direction, in addition to at least one of the narrowband synchronization raster, the wideband synchronization raster, and the common synchronization raster described above, a synchronization raster (also referred to as a synthesized synchronization raster) that is a candidate for the center frequency of a band obtained by combining the band of the narrowband SSB and the band of the wideband SSB (synthesized band, band from the lowest frequency to the highest frequency of the narrowband SSB and the wideband SSB) may be defined.

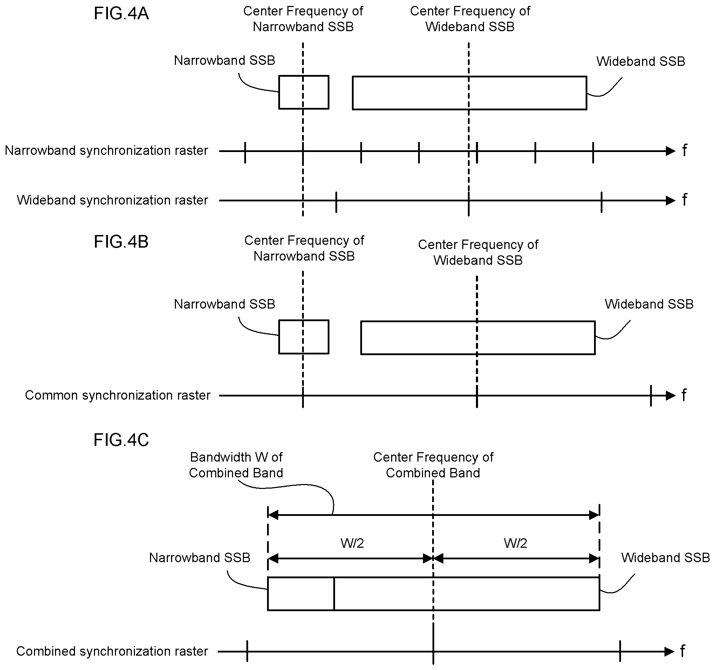

FIGS. 4A to 4C are diagrams to show examples of a synchronization raster. In FIG. 4A, a narrowband synchronization raster and a wideband synchronization raster are different from each other, the arrangement of the narrowband SSB in the frequency direction is determined so that the center frequency of the narrowband SSB is located on the narrowband synchronization raster, and the arrangement of the wideband SSB in the frequency direction is determined so that the center frequency of the wideband SSB is located on the wideband synchronization raster. In FIG. 4B, the arrangement of a narrowband SSB and a wideband SSB in the frequency direction is determined so that the center frequencies of the narrowband SSB and the wideband SSB are both located on a common synchronization raster. In FIG. 4C, arrangement of a narrowband SSB and a wideband SSB in the frequency direction is determined so that the center frequency of a band obtained by combining the band of the narrowband SSB and the band of the wideband SSB (synthesized band, band from the lowest frequency to the highest frequency of the narrowband SSB and the wideband SSB, bandwidth W) is located on a synthesized synchronization raster.

The wideband terminal may investigate a wideband SSB after receiving a narrowband SSB. The narrowband terminal need not investigate a wideband SSB after receiving a narrowband SSB.

The wideband terminal may recognize/identify the time/frequency resource of the wideband SSB by receiving/detecting/decoding the narrowband SSB and may receive the wideband SSB in the time/frequency resource.

A relative position (for example, a time offset/frequency offset) between the narrowband SSB and the wideband SSB may be defined in a specification. The wideband terminal that has received the narrowband SSB may recognize/identify the time/frequency resource of the wideband SSB, based on the time/frequency resource of the narrowband SSB and the relative position. For example, the wideband terminal that has received the narrowband SSB may recognize/identify the time position of the wideband SSB by adding a time offset to the time position of the narrowband SSB. Similarly, the wideband terminal that has received the narrowband SSB may recognize/identify the time position of the wideband SSB by adding the frequency offset to the frequency position of the narrowband SSB. In the present disclosure, the time offset may be a symbol offset, a slot offset, or the like. In the present disclosure, the frequency offset may be a resource block (RB) offset, a resource element (RE) offset, or the like.

A relative position (for example, the time offset/frequency offset) between the narrowband SSB and each of one or more transmission candidate resources of the wideband SSB may be defined in a specification. The wideband SSB may be transmitted in a part of the one or more transmission candidate resources or may be transmitted in all of the one or more transmission candidate resources. The wideband terminal that has received the narrowband SSB may recognize/identify one or more transmission candidate resources of the wideband SSB, based on the time/frequency resource of the narrowband SSB and the relative position, and may attempt to receive the wideband SSB in the one or more transmission candidate resources. For example, when transmission candidate resources (for example, transmission candidate resource X and transmission candidate resource Y) of two wideband SSBs are configured/defined for one narrowband SSB, the wideband terminal that has received the narrowband SSB may recognize/identify the time position of transmission candidate resource X of the wideband SSB by adding time offset X to the time position of the narrowband SSB and may recognize/identify the time position of transmission candidate resource Y of the wideband SSB by adding time offset Y to the time position of the narrowband SSB. Similarly, the wideband terminal that has received the narrowband SSB may recognize/identify the frequency position of transmission candidate resource X of the wideband SSB by adding frequency offset X to the frequency position of the narrowband SSB and may recognize/identify the frequency position of transmission candidate resource Y of the wideband SSB by adding frequency offset Y to the frequency position of the narrowband SSB. In this case, the wideband terminal may attempt to receive the wideband SSB in transmission candidate resource X and transmission candidate resource Y.

Alternatively, the time/frequency resource of the wideband SSB may be indicated to/configured for the wideband terminal by using the narrowband SSB. In this case, the narrowband SSB may include information on the time/frequency resource of the wideband SSB. This information may be information indicating a relative position between the narrowband SSB and the wideband SSB (for example, the time offset/frequency offset) or may be information indicating the absolute position of the wideband SSB (in other words, a specific time/frequency resource) (for example, the index of a specific symbol/slot, the index of a specific RB/RE). The wideband terminal may receive (or may assume to receive) the wideband SSB in the time/frequency resource indicated by the narrowband SSB.

The wideband terminal may receive the wideband SSB after receiving the narrowband SSB, to thereby perform an initial access procedure using the wideband resource. For example, the wideband terminal that has received the wideband SSB after receiving the narrowband SSB may recognize/identify the band of the wideband SSB as a band to be used for the initial access procedure (initial access band). The initial access band may be indicated/made notification to the wideband terminal by using at least one of the narrowband SSB and the wideband SSB.

When the narrowband SSB and the wideband SSB are contiguous in the frequency direction, the wideband terminal that has received the wideband SSB after receiving the narrowband SSB may recognize/identify a band obtained by combining the band of the narrowband SSB and the band of the wideband SSB as an initial access band.

When the narrowband SSB and the wideband SSB are noncontiguous in the frequency direction, the wideband terminal that has received the wideband SSB after receiving the narrowband SSB may recognize/identify a band including the band of the narrowband SSB and the band of the wideband SSB as an initial access band. In this case, the initial access band may or need not include at least one of an interval, a gap, and a band of a specific signal between the narrowband SSB and the wideband SSB.

A terminal that has not received (or has failed to receive) the wideband SSB after receiving the narrowband SSB may recognize/identify the band of the narrowband SSB as an initial access band.

According to the second embodiment described above, in an initial access procedure using both a narrowband SSB and a wideband SSB, the wideband terminal can appropriately receive the narrowband SSB and the wideband SSB, and the narrowband terminal can appropriately receive the narrowband SSB.

### <Third Embodiment>

In a third embodiment, in an initial access procedure, a wideband terminal investigates either a narrowband SSB or a wideband SSB, and a narrowband terminal always investigates a narrowband SSB.

The wideband terminal may investigate both a narrowband SSB and a wideband SSB. In this case, a rule/constraint/priority related to reception of a narrowband SSB and a wideband SSB may be defined.

For example, when the time-direction resources of the narrowband SSB and the wideband SSB are different from each other (or do not overlap) (for example, when the start symbols of the narrowband SSB and the wideband SSB are different from each other), the wideband terminal may prioritize reception of the SSB transmitted first, between the narrowband SSB and the wideband SSB.

When the time-direction resources of the narrowband SSB and the wideband SSB are different from each other (or overlap) (for example, when the start symbols of the narrowband SSB and the wideband SSB are the same), the wideband terminal may receive at least one of the narrowband SSB and the wideband SSB. When the wideband terminal receives only the narrowband SSB, the wideband terminal may prioritize reception of the wideband SSB associated with the narrowband SSB or the wideband SSB indicated/notified by the narrowband SSB, as in the second embodiment.

Alternatively, the wideband terminal may always investigate the wideband SSB.

In the third embodiment, as in the second embodiment, a common synchronization raster may be defined, or a narrowband synchronization raster and a wideband synchronization raster may be separately defined. In addition to at least one of the narrowband synchronization raster, the wideband synchronization raster, and the common synchronization raster, a synthesized synchronization raster may be defined.

According to the third embodiment described above, in an initial access procedure using both a narrowband SSB and a wideband SSB, a wideband terminal can appropriately receive at least one of the narrowband SSB and the wideband SSB, and the narrowband terminal can appropriately receive the narrowband SSB.

### <Fourth Embodiment>

A fourth embodiment relates to sequences of synchronization signals of SSBs.

The sequence of a synchronization signal (for example, a PSS/SSS) of a narrowband SSB and the sequence of a synchronization signal (for example, a PSS/SSS) of a wideband SSB may be associated with each other. The terminal may acquire a different sequence according to the frequency (for example, the synchronization raster)/bandwidth (for example, the maximum channel bandwidth) of the synchronization signal to be decoded.

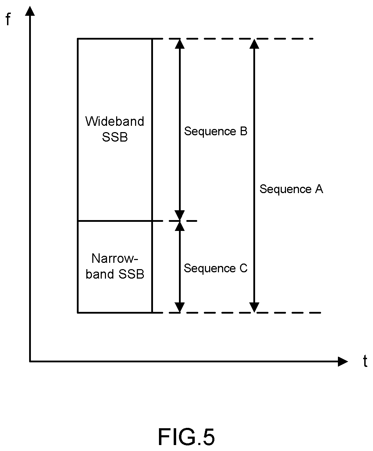

FIG. 5 is a diagram to show an example of sequences of synchronization signals of SSBs. In FIG. 5, a narrowband SSB and a wideband SSB are contiguous in the frequency direction, and the time resource of the narrowband SSB and the time resource of the wideband SSB are the same (overlap). Sequence B of the synchronization signal of the wideband SSB may be a part of sequence A. Sequence C of the synchronization signal of the narrowband SSB may be a part of sequence A other than sequence B. In other words, sequence A may be obtained by combining sequence C and sequence B. The length of sequence A may be the number of resource elements (REs) to which the synchronization signal of the narrowband SSB and the synchronization signal of the wideband SSB are mapped. The length of sequence B may correspond to the number of REs to which the synchronization signal of the wideband SSB is mapped. The length of sequence C may correspond to the number of REs to which the synchronization signal of the narrowband SSB is mapped. The wideband terminal may decode/detect/receive the narrowband SSB and the wideband SSB together to acquire sequence A, may decode/detect/receive only the wideband SSB to acquire sequence B, or may decode only the narrowband SSB to acquire sequence C. The narrowband terminal may decode/detect/receive the narrowband SSB to acquire sequence C.

At least one of a narrowband synchronization raster, a wideband synchronization raster, a common synchronization raster, and a synthesized synchronization raster may be defined as a frequency to which an SSB can be arranged.

The narrowband SSB may be arranged at higher frequencies than those of the wideband SSB or may be arranged at lower frequencies than those of the wideband SSB.

Alternatively, the narrowband SSB may be arranged in the band/resource of the wideband SSB. In other words, the narrowband SSB may be a part of the wideband SSB, and the narrowband terminal may receive a part of the wideband SSB (part, of the wideband SSB, arranged to the band supported by the narrowband terminal). In this case, the synchronization signal (for example, the PSS/SSS) of the wideband SSB may include a plurality of sequences. Each of the plurality of sequences may be a specific sequence (for example, an M sequence). One of the plurality of sequences may be a sequence of a synchronization signal (for example, a PSS/SSS) of a narrowband SSB (part of a wideband SSB).

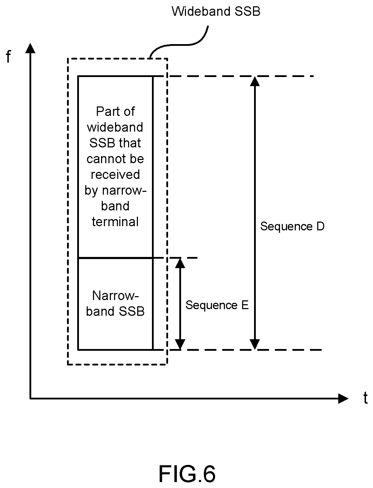

FIG. 6 is a diagram to show an example of sequences of synchronization signals of SSBs. In FIG. 6, a narrowband SSB (a part, of the wideband SSB, that can be received by the narrowband terminal) is arranged in the band/resource of the wideband SSB. The wideband terminal may decode the wideband SSB to acquire sequence D or may decode the narrowband SSB (a part of the wideband SSB) to acquire sequence E. The narrowband terminal may decode the narrowband SSB to acquire sequence E.

According to the fourth embodiment described above, in an initial access procedure using both a narrowband SSB and a wideband SSB, a narrowband terminal and a wideband terminal can appropriately acquire sequences.

### <Fifth Embodiment>

In a fifth embodiment, a wideband terminal and a narrowband terminal investigate only a narrowband SSB in an initial access procedure.

The frequency resource of the narrowband SSB is less than that of the wideband SSB and hence includes a more limited amount of information than that of the wideband SSB. Hence, at least one of embodiments 5.1 to 5.4 below may be defined in a specification.

### {Embodiment 5.1}

The narrowband SSB may include at least one of a physical cell ID (PCI) and information (for example, MIB, RMSI (SIB1), OSI) carried by a PBCH of an existing specification (for example, 5G NR).

### {Embodiment 5.2}

The narrowband SSB may have a larger/longer resource in the time direction than that of an SSB of an existing specification (for example, 5G NR).

The narrowband SSB may include one or more additional synchronization signals (for example, TSS, QSS, and the like) in addition to a synchronization signal (PSS/SSS) of the existing specification.

The PBCH of the narrowband SSB may have a resource extended in the time direction compared to that of a PBCH of an existing specification. For example, a resource for the PBCH may be configured after the additional synchronization signal(s).

### {Embodiment 5.3}

The wideband terminal and the narrowband terminal may be notified of specific information by using an SIB.

The specific information may be at least one of information necessary for identifying a cell ID, information on a frequency (for example, subcarrier spacing (SCS)), and information on an SSB index.

### {Embodiment 5.4}

The amount of information notified/configured by the narrowband SSB may be limited. For example, the flexibility of the configuration may be defined to be lower than that of an existing specification (for example, 5G NR) for a PDCCH/PDSCH for SIB1.

For example, the configuration information on the PDCCH for SIB1 notified by an MIB may be limited. In other words, the configuration information may be configured not to include specific information (for example, the frequency granularity of the PDCCH for SIB1, the frequency offset between the narrowband SSB and the PDCCH for SIB1).

The number of candidates/time positions/indices of the narrowband SSB within a specific time may be smaller than that of an existing specification. In other words, the number of bits for notifying SSB indices may be smaller than that of an existing specification. The specific time may be a half frame or transmission periodicity of a narrowband SSB.

According to the fifth embodiment described above, it is possible to appropriately perform an initial access procedure using only a narrowband SSB.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control/information for at least one of the above embodiments,
- supporting of a wideband SSB,
- supporting of a narrowband SSB, and
- maximum bandwidth (maximum channel bandwidth). For example, the maximum bandwidth per FR.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be any RRC parameter for a specific release (for example, Rel. 18/19) or the like.

When the UE does not support at least one of the specific UE capabilities above or is not configured with the specific information, operation of Rel. 15/16 may be applied, for example.

### (Supplementary Notes)

Regarding one embodiment of the present disclosure, the following supplementary notes of the invention will be given.

### {Supplementary Note 1}

A terminal including:
a receiving section that receives, between a first synchronization signal block transmitted in a first band and a second synchronization signal block transmitted in a second band wider than the first band, at least the first synchronization signal block; and
a control section that controls an initial access procedure, based on at least the first synchronization signal block.

### {Supplementary Note 2}

The terminal according to supplementary note 1, wherein the receiving section receives the second synchronization signal block in a resource determined based on the first synchronization signal block.

### {Supplementary Note 3}

The terminal according to supplementary note 1 or 2, wherein the receiving section receives the first synchronization signal block on a raster common to the first synchronization signal block and the second synchronization signal block.

### {Supplementary Note 4}

The terminal according to any one of supplementary notes 1 to 3, wherein the control section detects a sequence that spans the first synchronization signal block and the second synchronization signal block.

### (Radio Communication System)

Hereinafter, a structure of a radio communication system according to one embodiment of the present disclosure will be described. In this radio communication system, the radio communication methods according to the respective embodiments of the present disclosure described above may each be used alone or may be used in combination for communication.

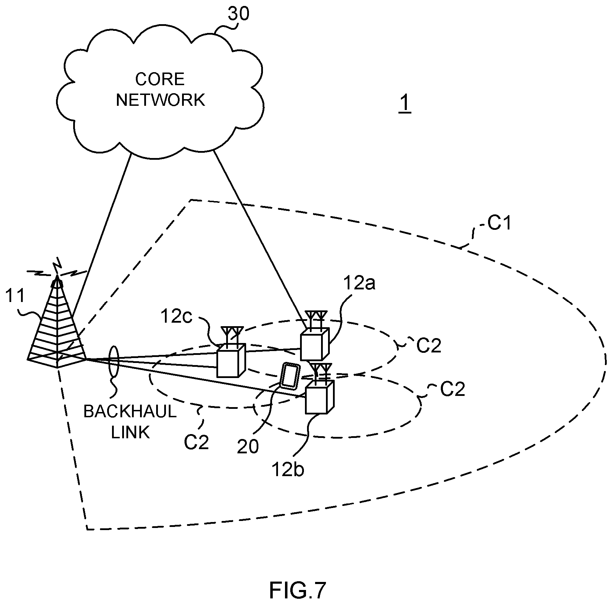

FIG. 7 is a diagram to show an example of a schematic structure of the radio communication system according to one embodiment. A radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

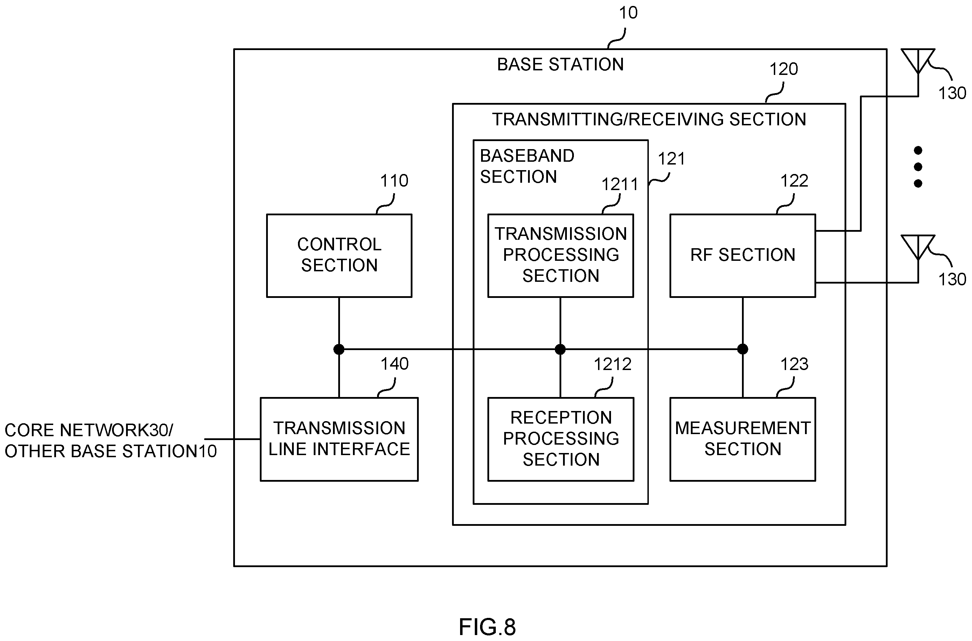

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving sections 120 may transmit a first synchronization signal block (for example, a narrowband SSB) in a first band and transmit a second synchronization signal block (for example, a wideband SSB) in a second band wider than the first band.

The control section 110 may control an initial access procedure, based on at least the first synchronization signal block.

### (User Terminal)

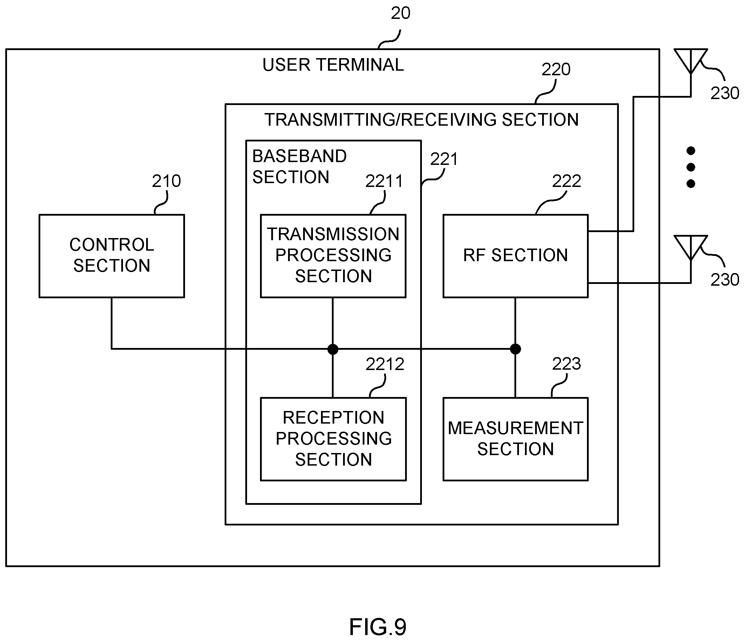

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive, between a first synchronization signal block (for example, a narrowband SSB) transmitted in a first band and a second synchronization signal block (for example, a wideband SSB) transmitted in a second band wider than the first band, at least the first synchronization signal block.

The control section 210 may control an initial access procedure, based on at least the first synchronization signal block.

The transmitting/receiving section 220 may receive the second synchronization signal block in a resource determined based on the first synchronization signal block.

The transmitting/receiving section 220 may receive the first synchronization signal block on a raster (for example, a common synchronization raster) common to the first synchronization signal block and the second synchronization signal block.

The control section 210 may detect a sequence that spans the first synchronization signal block and the second synchronization signal block. The sequence may be a sequence obtained by combining a sequence of a synchronization signal (for example, a PSS/SSS) of the first synchronization signal block and a sequence of a synchronization signal (for example, a PSS/SSS) of the second synchronization signal block.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

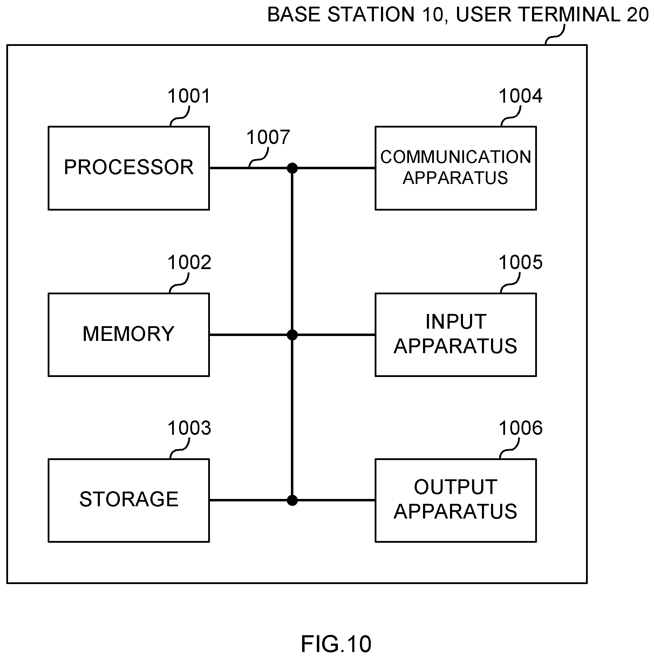

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

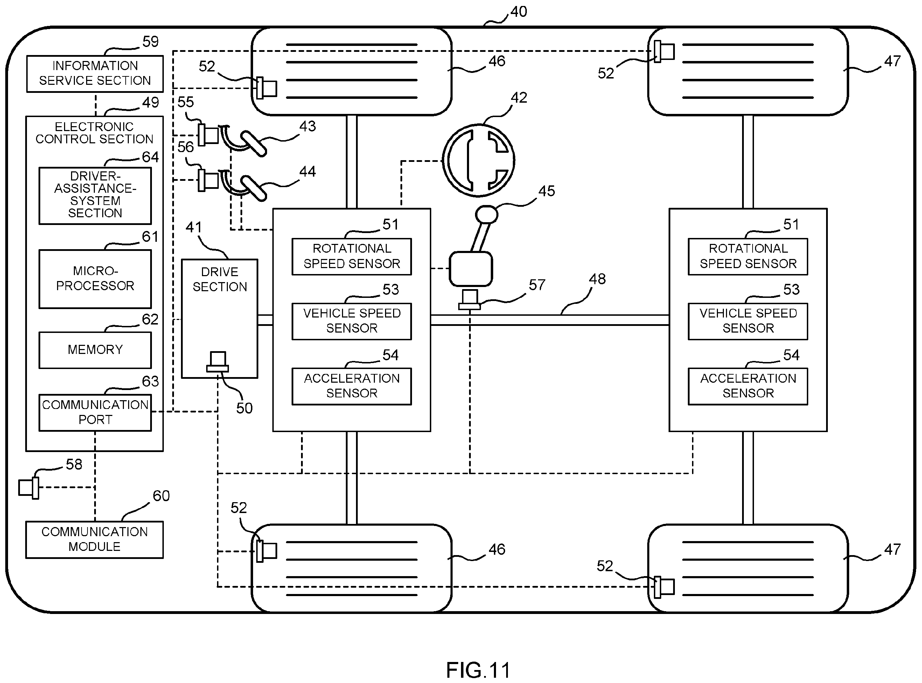

FIG. 11 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives, between a first synchronization signal block transmitted in a first band and a second synchronization signal block transmitted in a second band wider than the first band, at least the first synchronization signal block; and
a control section that controls an initial access procedure, based on at least the first synchronization signal block.

2. The terminal according to claim 1, wherein
the receiving section receives the second synchronization signal block in a resource determined based on the first synchronization signal block.

3. The terminal according to claim 1, wherein
the receiving section receives the first synchronization signal block on a raster common to the first synchronization signal block and the second synchronization signal block.

4. The terminal according to claim 1, wherein
the control section detects a sequence that spans the first synchronization signal block and the second synchronization signal block.

5. A radio communication method for a terminal, the radio communication method comprising:
receiving, between a first synchronization signal block transmitted in a first band and a second synchronization signal block transmitted in a second band wider than the first band, at least the first synchronization signal block; and
controlling an initial access procedure, based on at least the first synchronization signal block.

6. A base station comprising:
a transmitting section that transmits a first synchronization signal block in a first band and transmits a second synchronization signal block in a second band wider than the first band; and
a control section that controls an initial access procedure, based on at least the first synchronization signal block.
